# EUROPEAN PATENT SPECIFICATION

(11) **EP 4 474 230 B1**
(45) Date of publication and mention of the grant of the patent: **21.01.2026**
(21) Application number: 23382569.4
(22) Date of filing: 09.06.2023
(51) Int. Cl.: B60T 7/06, B60T 7/10, B60T 11/06, B60T 11/18, B60T 17/22, G05G 1/46

(54) **ACTUATION DEVICE FOR A VEHICLE**
BETÄTIGUNGSVORRICHTUNG FÜR EIN FAHRZEUG
DISPOSITIF D'ACTIONNEMENT POUR UN VEHICULE

(43) Date of publication of application: 11.12.2024
(73) Proprietor: Batz, S.Coop., 48140 Igorre (ES)
(72) Inventor: CORRAL RODRIGUEZ, Pedro, 38700 CASTRO URDIALES (ES); BURGUERA ALBIZURI, Fernando, 48014 BILBAO (ES)
(74) Representative: Galbaian S.Coop.

(56) References cited:
- EP-A1- 1 731 392
- JP-A- 2004 050 952
- JP-A- 2016 078 612
- US-A1- 2021 213 925

## Description

### TECHNICAL FIELD

The present invention relates to an actuation device for a vehicle, a vehicle incorporating said actuation device, and a method for detecting the failure of an elastic means applied in said actuation device.

### PRIOR ART

Actuation devices for vehicles, in particular foot-operated actuation devices, in which the driver's action is measured by means of sensors that measure the position of the actuation device and/or the force with which the actuation device is being actuated at all times, are known. A control unit is in charge of interpreting the information from the sensors so as to act on the corresponding system, such that the driver's action on the actuation device is transmitted to the corresponding system without there having to be a direct mechanical connection between the actuation device and the system.

For example, braking systems known as "brake by wire" are known in which the braking actuation device is equipped with sensors and does not act directly on the braking system, but rather the sensors of the actuation device detect the position and/or the force with which the actuation device is being acted on at all times, and a control unit is in charge of interpreting the information from the sensors so as to act on the braking system.

Braking actuation devices of this type require an ASIL D security level, which makes it necessary to combine at least two different types of sensors, such that a redundant measurement of the action on the braking actuation device is obtained. In general braking actuation devices of this type usually have, for the most part, three types of sensors: angular sensors, linear sensors, and/or force sensors. US 2021/213925 A1 is showing an equalizer for the parking brake of a farm tractor, as an example of a state of the art actuation device.

### DISCLOSURE OF THE INVENTION

The object of the invention is to provide an actuation device for a vehicle, a vehicle incorporating said actuation device, and a method for detecting the failure of an elastic means applied in said actuation device, as defined in the claims.

A first aspect of the invention relates to an actuation device for a vehicle.

The actuation device comprises a pushing element that is displaced when a driver acts on the actuation device, a first elastic means and a second elastic means arranged in parallel, and a rocker.

When the pushing element is displaced, i.e., when a driver acts on the actuation device, the first elastic means and the second elastic means are compressed, exerting a force on the rocker, an incorrect operation of the first elastic means or of the second elastic means being detected when the rocker has an inclination other than a predetermined reference inclination.

The first elastic means and the second elastic means form an elastic system exerting certain resistance to the driver's action on the actuation device such that the driver receives a suitable actuation sensation.

In the state of the art, to enable detecting the failure, i.e., breakage of the elastic system, it is known to use a force sensor. However, force sensor technology is under development and these sensors are more expensive than angular or linear sensors.

Including a rocker on which the first elastic means and the second elastic means act, such that the inclination of said rocker reflects whether or not said elastic means work properly, makes it possible to detect a failure in the elastic system using a pair of linear sensors or an angular sensor which measures the inclination of said rocker, such that a failure of the elastic system can be detected without needing to use a force sensor.

A second aspect of the invention relates to a vehicle incorporating an actuation device such as the one described in the first aspect of the invention.

A third aspect of the invention relates to a method for detecting the failure of an elastic means in an actuation device such as the one described in the first aspect of the invention.

The method for detecting the failure of an elastic means of an actuation device monitors the degree of inclination of the rocker such that if said degree of inclination differs from the predetermined degree of inclination, the failure of one of the elastic means is determined.

These and other advantages and features of the invention will become apparent in view of the figures and the detailed description of the invention.

### DESCRIPTION OF THE DRAWINGS

Figure 1 shows a perspective view of the actuation device according to a preferred embodiment of the invention.
Figure 2 shows an exploded view of the actuation device of Figure 1.
Figure 3 shows a section view of the actuation device of Figure 1, with the actuation device in standby.
Figure 4 shows a partial view of the actuation device of Figure 1, with the actuation device in standby.
Figure 5 shows a second partial view of the actuation device of Figure 1, with the actuation device in standby.
Figure 6 shows a section view of the actuation device of Figure 1, with the actuation device actuated.
Figure 7 shows a partial view of the actuation device of Figure 1, with the actuation device actuated.
Figure 8 shows a second partial view of the actuation device of Figure 1, with the actuation device actuated.
Figure 9 shows a perspective view of the rocker of the actuation device of Figure 1.
Figure 10 shows a perspective view of the cover of the actuation device of Figure 1.
Figure 11 shows a section view of the actuation device of Figure 1, with the actuation device actuated up to an intermediate position and with the second elastic means broken.
Figure 12 shows a detailed view of Figure 11.
Figure 13 shows a partial view of the actuation device of Figure 1, with the actuation device actuated up to an intermediate position and with the second elastic means broken.
Figure 14 shows a second partial view of the actuation device of Figure 1, with the actuation device actuated up to an intermediate position and with the second elastic means broken.
Figure 15 shows a section view of the actuation device according to an alternative embodiment of the invention, with the actuation device in standby.
Figure 16 shows a detailed view of Figure 15.
Figure 17 shows a section view of the actuation device of Figure 15, with the actuation device actuated.

### DETAILED DISCLOSURE OF THE INVENTION

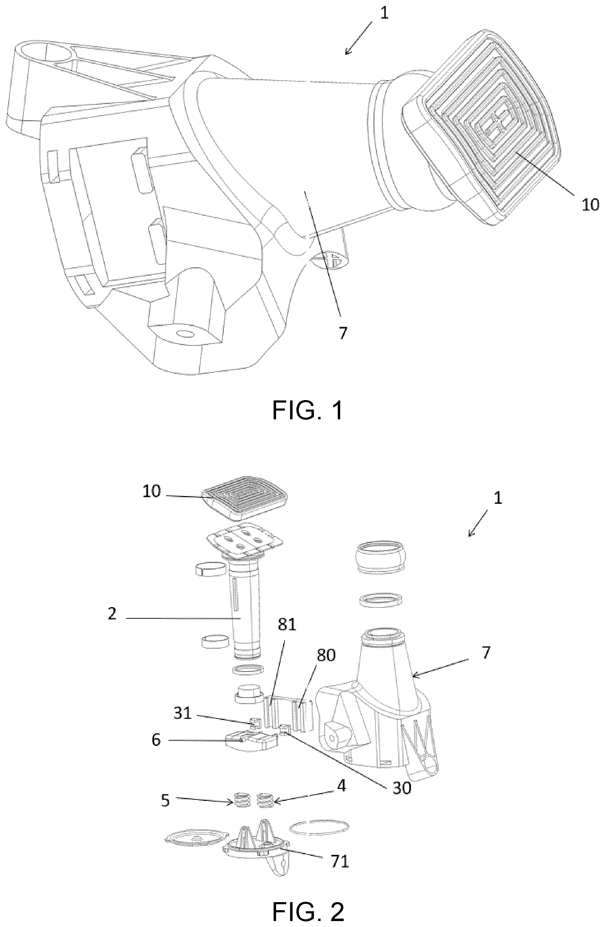

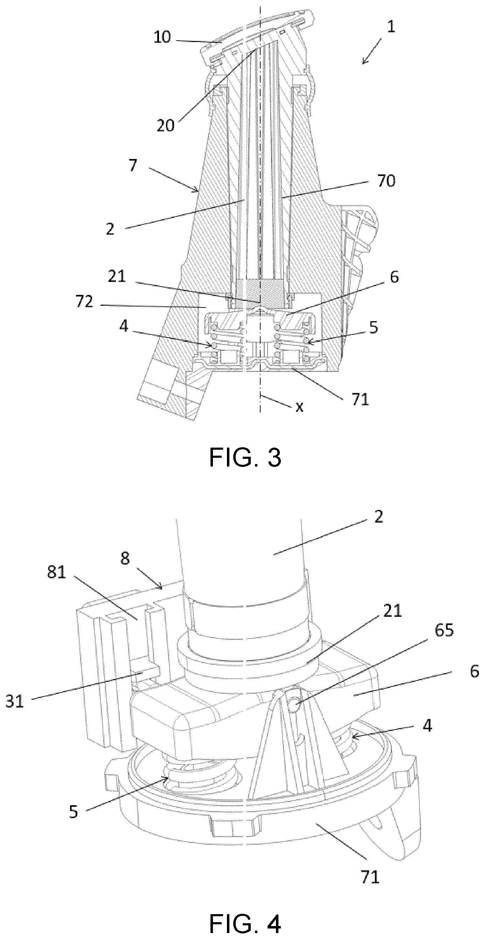

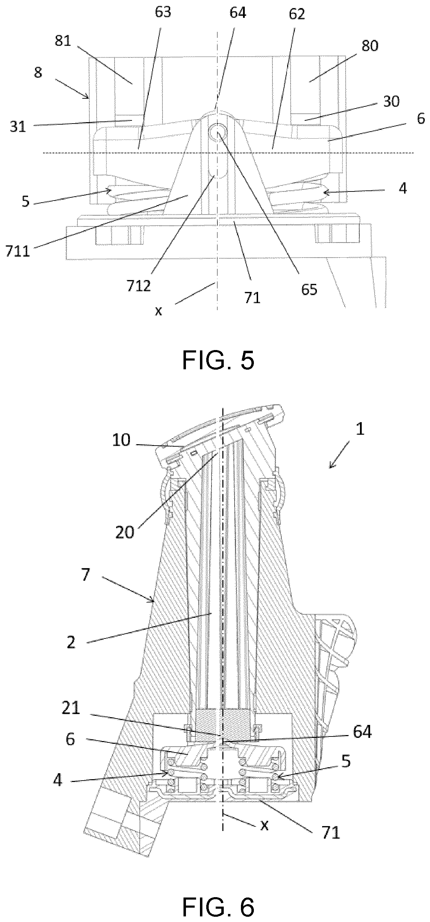

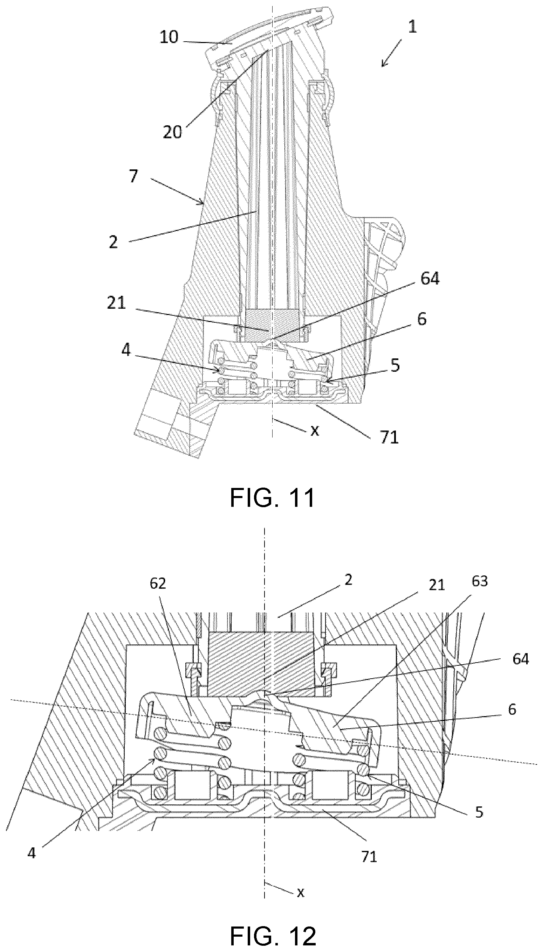

Figures 1 to 14 show a preferred embodiment of the actuation device 1 according to the invention. Figures 3 to 5 show the actuation device 1 when in standby, i.e., when the driver does not act on the actuation device. Figures 6 to 8 show the actuation device 1 being actuated by the driver. Figures 11 to 14 show the actuation device, with the second elastic means 5 broken. In the context of the invention it is considered that one of the elastic means is broken or that a failure has occurred in one of the elastic means when said elastic means loses, at least in part, its properties..

Preferably, the actuation device 1 is a foot-operated actuation device and can be of the pressure pad type, like the one shown in the preferred embodiment, a conventional pivotable pedal, or an organ-type pedal.

Preferably, the driver's action on the actuation device 1 is measured by means of sensors that measure the position of the actuation device, and a specific control unit or the central control unit of the vehicle is in charge of interpreting the information from the sensors so as to act on the corresponding system.

Preferably, the actuation device 1 is an electronic brake device, also known as a "brake by wire" device. Alternatively, the actuation device could be applied to be used as an accelerator or clutch.

The actuation device 1 comprises a pushing element 2 that is displaced when a driver acts on the actuation device 1. Preferably, the actuation device 1 comprises a plate 10, such that the driver acts with his/her foot on said plate 10. In the preferred embodiment shown in the figures, the pushing element 2 comprises a first end 20 coupled to the plate 10, such that when the driver acts on the plate 10 the pushing element 2 is displaced on an axis of displacement x. In other embodiments not shown in the figures, the plate can be coupled to the pushing element by means of an intermediate element.

The actuation device 1 also comprises a first elastic means 4 and a second elastic means 5 arranged in parallel, and a rocker 6.

When the pushing element 2 is displaced, the first elastic means 4 and the second elastic means 5 are compressed, exerting a force on the rocker 6, an incorrect operation of the first elastic means 4 or of the second elastic means 5 being detected when the rocker 6 has an inclination other than a predetermined reference inclination.

The first elastic means 4 and the second elastic means 5 form an elastic system exerting certain resistance to the displacement of the pushing element 2 when the driver acts on the actuation device 1, such that the driver receives a suitable actuation sensation. The use of an elastic system to provide this opposition to the actuation of the actuation device 1 is also known as a "feel simulator".

As discussed above, when the driver actuates the actuation device 1, the displacement of the pushing element 2 compresses the first elastic means 4 and the second elastic means 5 which in turn, by being compressed, exert a force on the rocker 6. Therefore, including a rocker 6 on which the first elastic means 4 and the second elastic means 5 act, such that the inclination of said rocker 6 reflects whether or not the elastic means 4, 5 work properly, makes it possible to detect a failure in the elastic system using a pair of linear sensors or an angular sensor which measures the inclination of said rocker 6, such that a failure of the "feel simulator" can be detected without needing to use a force sensor.

The actuation device 1 has a configuration such that it allows it to continue to be operative in the case of breakage of one of the elastic means 4, 5, such that although the driver may notice a change in the actuation sensation, he/she can continue acting on the actuation device 1 and therefore can continue to use the system associated with the actuation device 1.

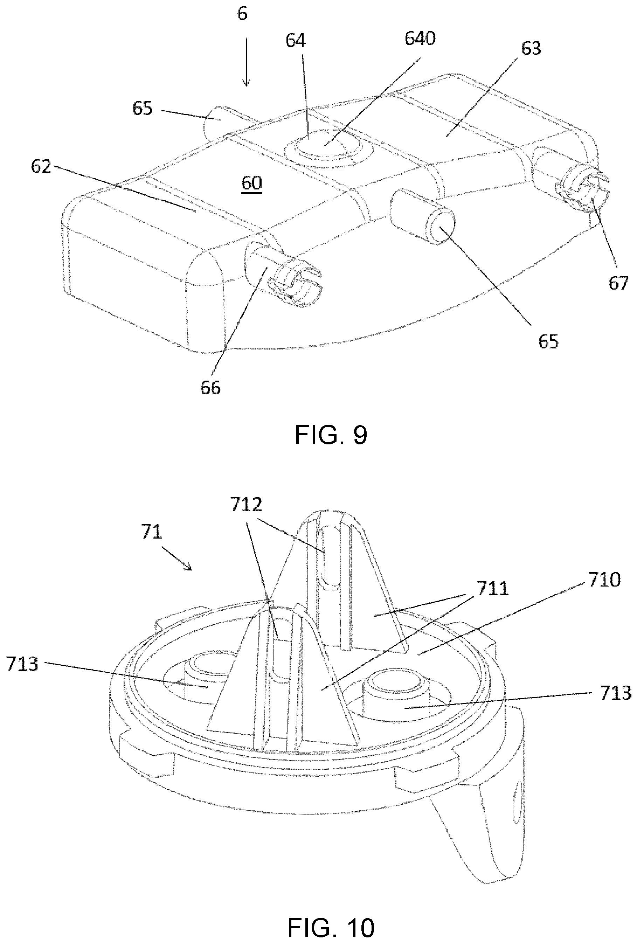

The rocker 6 comprises a support part 64, a first part 62 on a side of the support part 64 and a second part 63 on the other side of the support part 64. When the displacement of the pushing element 2 compresses the first elastic means 4 and the second elastic means 5, the first elastic means 4 exerts a force on the first part 62, while the second elastic means 5 exerts a force on the second part 63. In the case of breakage of one of the elastic means 4, 5, only the other elastic means would exert a force on the rocker 6, obtaining an inclination of the rocker 6 other than the predetermined reference inclination. Preferably, as shown in detail in Figure 9, the support part 64 is arranged in the central part of the rocker 6, the first part 62 being a first half of the rocker 6 and the second part 63 being a second half of the rocker 6. In the preferred embodiment, to facilitate the rotational function of the rocker 6', i.e., to facilitate the change in inclination of the rocker 6 in the event that a failure of one of the elastic means 4, 5 occurs, the rocker 6 comprises in the support part 64 a semispherical protrusion 640 cooperating with a semispherical negative print of the actuating element 2.

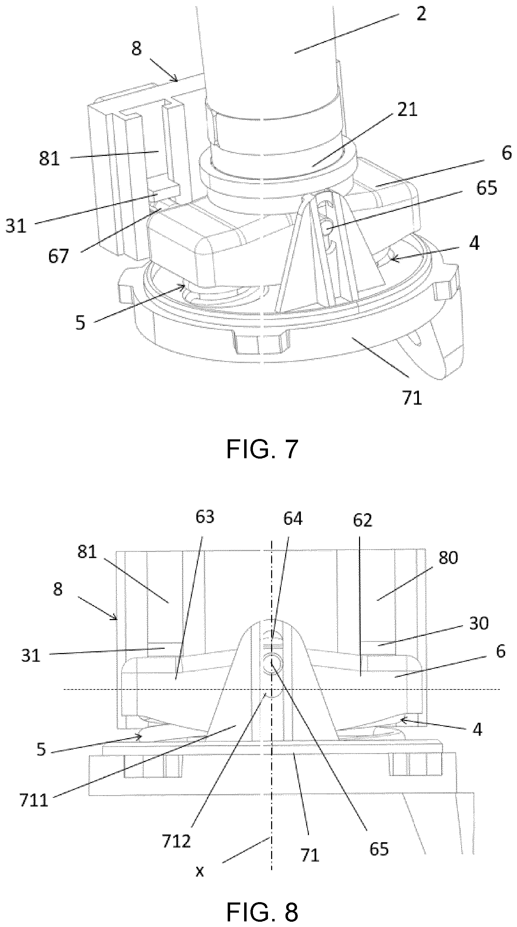

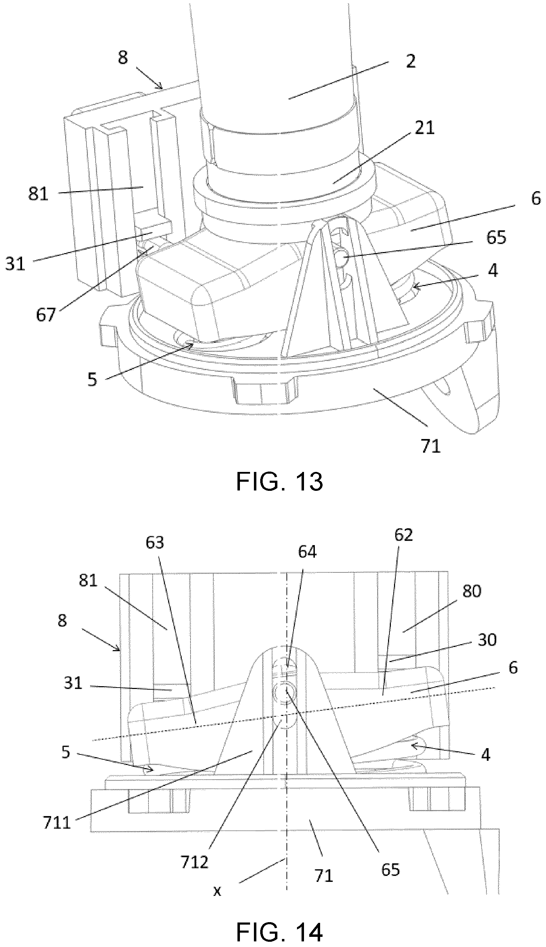

Preferably, during the normal operation of the first elastic means 4 and of the second elastic means 5, the displacement of the pushing element 2 compresses said first elastic means 4 and said second elastic means 5 to the same extent. Furthermore, preferably the first elastic means 4 and the second elastic means 5 comprise substantially the same characteristics and are arranged such that the rocker 6 is arranged substantially perpendicular with respect to the axis of displacement x of the pushing element 2. In this case, during the normal operation the rocker 6 would be arranged at all times, i.e., both in standby (see Figure 5) and when the driver acts on the actuation device 1 (see Figure 8), perpendicular with respect to the axis of displacement x of the pushing element 2, and it can be considered that in this situation, the predetermined reference inclination of the rocker 6 would be 0°, making it possible to determine the breakage of the first elastic means 4 or of the second elastic means 5 if the rocker 6 was not arranged perpendicular (see Figure 14) with respect to the axis of displacement x of the pushing element 2, i.e., if the inclination of the rocker 6 were to differ from 0°, in standby and/or when the driver acts on the actuation device 1. Alternatively, the predetermined reference inclination could be one other than 0°, i.e., during the normal operation of the first elastic means and of the second elastic means in standby and/or when actuated by the driver, the rocker may not be arranged perpendicular with respect to the axis of displacement x of the pushing element.

Preferably, to be able to determine the inclination of the rocker 6, the actuation device 1 comprises a first target 30 and a second target 31 coupled to the rocker 6, a first linear sensor configured for measuring the displacement of the first target 30, and a second linear sensor configured for measuring the displacement of the second target 31, the inclination of the rocker 6 being determined depending on the measurement of said first linear sensor and said second linear sensor. More preferably, the first linear sensor is an inductive sensor, and the second linear sensor is a magnetic linear sensor, the first target 30 being a metallic sheet and the second target 31 being a magnet.

In the preferred embodiment shown in the figures, the rocker 6 comprises a first pivot 66 in which the first target 30 is pivotably coupled, and a second pivot 67 in which the second target 31 is pivotably coupled. The actuation device 1 also comprises an electronic assembly 8 comprising an electronic board in which the first linear sensor and the second linear sensor are arranged, a first guide channel 80 in which the first target 30 is movably housed, and a second guide channel 81 in which the second target 31 is movably housed. In other possible embodiments, the actuation device could comprise different guiding means for the first target and the second target, or even dispense with guiding means provided that it is ensured that the reading of the sensors is suitable.

Alternatively, the actuation device may comprise an angular sensor for measuring the inclination of the rocker.

Preferably, the rocker 6 is arranged between the pushing element 2 and the first elastic means 4 and the second elastic means 5, as shown in the figures of the preferred embodiment of the invention, with the pushing element 2 being arranged supported on the outer face 61 of the support part 64 of the rocker 6, the inner face of the first part 62 of the rocker 6 being supported on the first elastic means 4, and the inner face of the second part 63 of the rocker 6 being supported on the second elastic means 5. Therefore, the displacement of the pushing element 2 pushes the rocker 6, which is also displaced along the axis of displacement x of the pushing element 2, the rocker 6 compressing the first elastic means 4 and the second elastic means 5. In this case, preferably the displacement of the pushing element 2 is determined, i.e., the driver's action on the actuation device 1 is determined depending on the displacement of the rocker 6. Therefore, by using only two linear sensors it would be possible both to detect the failure of one of the elastic means 4, 5 and to determine the driver's action on the actuation device 1, such that if said linear sensors are based on different technologies, for example one of them is an inductive sensor and the other one is a magnetic sensor, the ASIL D standard would also be met in the event that the actuation device 1 is used for applying a "brake by wire".

As discussed above, the configuration of the actuation element 1 allows maintaining the braking function in case of failure/breakage of one of the elastic means 4, 5. Figure 12 shows the arrangement of the rocker 6 of the preferred embodiment with the second elastic means 5 broken. In this situation, the pressure exerted by the first elastic means 4 on the rocker 6 causes the outer face 60 of the first part 62 of the rocker 6 to abut with the pushing element 2, exerting pressure thereon and causing said pushing element 2 to have a tendency for the standby position exerting opposition against the driver's action on the actuation element 1 which will be less than that resulting from both elastic means 4, 5 when working properly.

In the preferred embodiment, the actuation device 1 comprises a cover 71, shown in detail in Figure 10, comprising a base 710 and a pair of arms 711 extending perpendicularly from said base 710, each arm 711 comprising a groove 712. Furthermore, the rocker 6 comprises a pair of coupling shafts 65, the coupling shafts 65 of the rocker 6 being movably coupled in the grooves 712 of the arms 711 of the cover 71. The rocker 6 is thereby arranged coupled to the cover 71 in a movable manner with respect to the axis of displacement x of the pushing element 2, and in a pivotable manner such that in the case of breakage of the first elastic means 4 or the second elastic means 5 the rocker 6 can pivot with respect to said axis of displacement x of the pushing element 2.

In the preferred embodiment of the actuation device 1, the first elastic means 4 and the second elastic means 5 are arranged between the rocker 6 and the base 710 of the cover 71. The base 710 comprises a retaining element 713 for the first elastic means 4 and a retaining element 713 for the second elastic means 5, such that said retaining elements 713 fix the first elastic means 4 and the second elastic means 5 with respect to the base 710. In this preferred embodiment, the first elastic means 4 consists of a single spring and the second elastic means consists of a single spring.

Furthermore in the preferred embodiment, the actuation device 1 comprises a main support 7 comprising a guide housing 70 in which the pushing element 2 is movably housed, and a main housing 72 communicated with the guide housing 70 in which the rocker 6, the first elastic means 4, and the second elastic means 5 are arranged, the cover 71 being fixed to said main support 7, covering an opening of the main housing 72.

Alternatively, in an embodiment not shown in the figures, the rocker can be arranged between a fixed base and the first elastic means and the second elastic means, the pushing element acting on a first end of the first elastic means and on a first end of the second elastic means, a second end of the first elastic means being supported on a first face of the first part of the rocker, a second end of the second elastic means being supported on the first face of the second part of the rocker, and a second face (opposite the first face) of the support part of the rocker being supported on the fixed base.

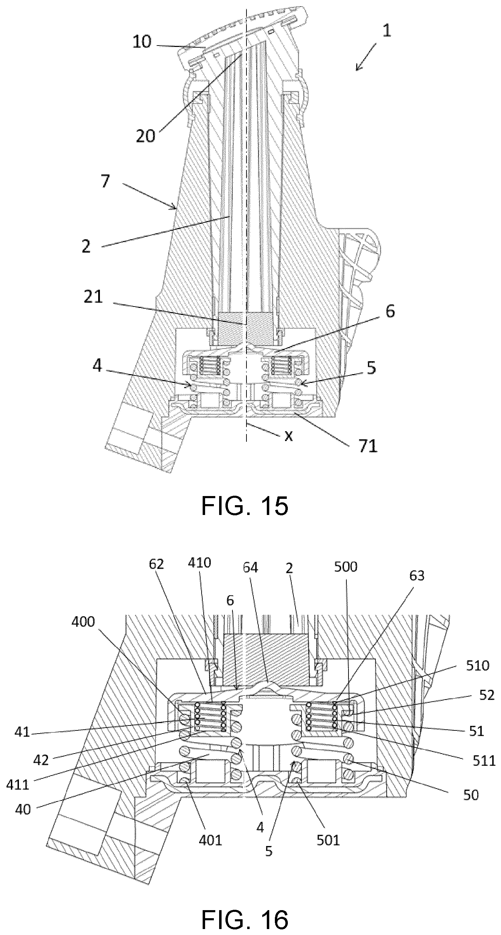

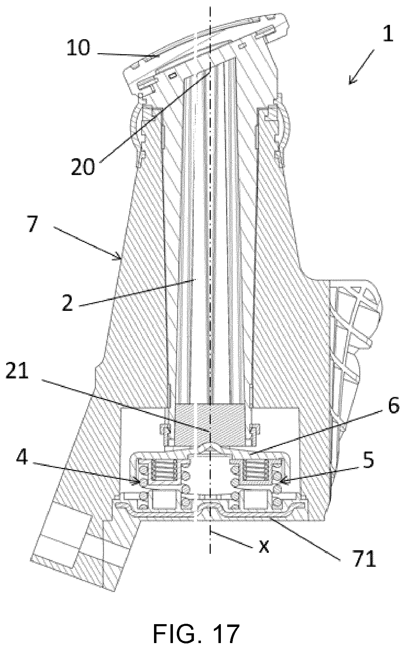

Figures 15 to 17 show an alternative embodiment of the actuation device of the invention.

Said alternative embodiment differs from the preferred embodiment in the configuration of the first elastic means 4 and the second elastic means 5. The remaining features are similar to those of the preferred embodiment and it is therefore not considered necessary to describe them again.

As shown in detail in Figure 16, in this alternative embodiment both the first elastic means 4 and the second elastic means 5 comprise a main spring 40, 50 and a secondary spring 41, 51 connected in series, the secondary springs 41, 51 comprising an elastic constant less than that of the main springs 40, 50, the secondary springs 41, 51 being configured to prestress the rocker 6 when the actuation device 1 is not actuated by the driver. Furthermore, both the first elastic means 4 and the second elastic means 5 also comprise a support 42, 52. Therefore, both the first elastic means 4 and the second elastic means 5 are arranged as follows between the base 710 and the rocker 6: the first end 401, 501 of the main spring 40, 50 is arranged supported at the base 710, the support 42, 52 is arranged supported at the second end 400, 500 of the main spring 40, 50, a first end 411, 511 of the secondary spring 41, 51 is housed in the support 42, 52, and a second end 410, 510 of the secondary spring 41,51 is supported against the rocker 6.

A second aspect of the invention relates to a vehicle comprising at least one actuation device 1 like the one described above.

A third aspect of the invention relates to a method for detecting the failure of an elastic means 4, 5 of an actuation device 1 like the one described above. In the method for detecting a failure, the degree of inclination of the rocker 6 is monitored such that if said degree of inclination differs from the predetermined degree of inclination, the failure of one of the elastic means 4, 5 is determined.

## Claims

1. Actuation device for a vehicle, said actuation device comprising
- a pushing element (2) that is displaced when a driver acts on the actuation device (1),
- a first elastic means (4) and a second elastic means (5) arranged in parallel, and
- a rocker (6),
such that when the pushing element (2) is displaced, the first elastic means (4) and the second elastic means (5) are compressed, exerting a force on the rocker (6), **characterized in that** an incorrect operation of the first elastic means (4) or of the second elastic means (5) being detected when the rocker (6) has an inclination other than a predetermined reference inclination.

2. Actuation device according to claim 1, comprising a first target (30) and a second target (31) coupled to the rocker (6), a first linear sensor configured for measuring the displacement of the first target (30), and a second linear sensor configured for measuring the displacement of the second target (31), the inclination of the rocker (6) being determined depending on the measurement of said first linear sensor and said second linear sensor.

3. Actuation device according to claim 2, comprising an electronic assembly (8) comprising an electronic board in which the first linear sensor and the second linear sensor are arranged, a first guide channel (80) in which the first target (30) is movably housed and a second guide channel (81) in which the second target (31) is movably housed.

4. Actuation device according to claim 2 or 3, wherein the first linear sensor is an inductive sensor, and the second linear sensor is a magnetic linear sensor, the first target (30) being a metallic sheet and the second target (31) being a magnet.

5. Actuation device according to any of claims 1 to 4, wherein, during the normal operation of the first elastic means (4) and of the second elastic means (5), the displacement of the pushing element (2) compresses said first elastic means (4) and said second elastic means (5) to the same extent.

6. Actuation device according to any of claims 1 to 5, wherein the first elastic means (4) and the second elastic means (5) comprise substantially the same characteristics and are arranged such that the rocker (6) is arranged substantially perpendicular with respect to the axis of displacement (x) of the pushing element (2).

7. Actuation device according to any of claims 1 to 6, wherein both the first elastic means (4) and the second elastic means (5) comprise a main spring (40, 50) and a secondary spring (41, 51) connected in series, the secondary springs (41, 51) comprising an elastic constant less than that of the main springs (40, 50), the secondary springs (41, 51) being configured to prestress the rocker (6) when the actuation device (1) is not actuated by the driver.

8. Actuation device according to any of claims 1 to 7, wherein the rocker (6) is arranged between the pushing element (2) and the first elastic means (4) and the second elastic means (5), such that the displacement of the pushing element (2) pushes the rocker (6), the rocker (6) compressing the first elastic means (4) and the second elastic means (5).

9. Actuation device according to claim 8, wherein the displacement of the pushing element (2) is determined depending on the displacement of the rocker (6).

10. Actuation device according to claim 8 or 9, wherein the pushing element (2) is arranged supported at the center (64) of an outer face (61) of the rocker (6), with a first half of the rocker (6) being supported on the first elastic means (4), and a second half of the rocker (6) being supported on the second elastic means (5).

11. Actuation device according to any of claims 1 to 10, comprising a cover (71) comprising a base (710) and a pair of arms (711) extending perpendicularly from said base (710), each arm (711) comprising a groove (712), and the rocker (6) comprising a pair of coupling shafts (65), the coupling shafts (65) of the rocker (6) being movably coupled in the grooves (712) of the arms (711) of the cover (71).

12. Actuation device according to claim 11, wherein the first elastic means (4) and the second elastic means (5) are arranged between the rocker (6) and the base (710) of the cover (71).

13. Actuation device according to claim 11 or 12, comprising a main support (7) comprising a guide housing (70) in which the pushing element (2) is movably housed, and a main housing (72) communicated with the guide housing (70) in which the rocker (6), the first elastic means (4), and the second elastic means (5) are arranged, the cover (71) being fixed to said main support (7), covering an opening of the main housing (72).

14. Vehicle comprising at least one actuation device (1) according to any of claims 1 to 13.

15. Method for detecting the failure of an elastic means (4, 5) of an actuation device (1) according to any of claims 1 to 13, **characterized in that** the degree of inclination of the rocker (6) is monitored such that if said degree of inclination differs from the predetermined degree of inclination, the failure of one of the elastic means (4, 5) is determined.

## Patentansprüche

1. Betätigungsvorrichtung für ein Fahrzeug, wobei die Betätigungsvorrichtung Folgendes umfasst:
- ein Schiebeelement (2), das sich verschiebt, wenn ein Fahrer auf die Betätigungsvorrichtung (1) einwirkt,
- ein erstes elastisches Mittel (4) und ein zweites elastisches Mittel (5), die parallel angeordnet sind, und
- ein Kippstück (6),
so dass, wenn das Schiebeelement (2) verschoben wird, das erste elastische Mittel (4) und das zweite elastische Mittel (5) zusammengedrückt werden, wobei eine Kraft auf das Kippstück (6) ausgeübt wird, **dadurch gekennzeichnet, dass** ein fehlerhafter Betrieb des ersten elastischen Mittels (4) oder des zweiten elastischen Mittels (5) erkannt wird, wenn das Kippstück (6) eine andere Neigung als eine vorbestimmte Referenzneigung aufweist.

2. Betätigungsvorrichtung nach Anspruch 1, umfassend ein erstes Ziel (30) und ein zweites Ziel (31), die mit dem Kippstück (6) gekoppelt sind, einen ersten linearen Sensor, der dazu konfiguriert ist, die Verschiebung des ersten Ziels (30) zu messen, und einen zweiten linearen Sensor, der dazu konfiguriert ist, die Verschiebung des zweiten Ziels (31) zu messen, wobei die Neigung des Kippstücks (6) in Abhängigkeit von der Messung des ersten linearen Sensors und des zweiten linearen Sensors bestimmt wird.

3. Betätigungsvorrichtung nach Anspruch 2, umfassend eine elektronische Baugruppe (8) umfassend eine elektronische Platine, in der der erste lineare Sensor und der zweite lineare Sensor angeordnet sind, einen ersten Führungskanal (80), in dem das erste Ziel (30) beweglich aufgenommen ist, und einen zweiten Führungskanal (81), in dem das zweite Ziel (31) beweglich aufgenommen ist.

4. Betätigungsvorrichtung nach Anspruch 2 oder 3, wobei der erste lineare Sensor ein induktiver Sensor ist und der zweite lineare Sensor ein magnetischer linearer Sensor ist, wobei das erste Ziel (30) ein Metallblech und das zweite Ziel (31) ein Magnet ist.

5. Betätigungsvorrichtung nach einem der Ansprüche 1 bis 4, wobei während des normalen Betriebs des ersten elastischen Mittels (4) und des zweiten elastischen Mittels (5) die Verschiebung des Schiebeelements (2) das erste elastische Mittel (4) und das zweite elastische Mittel (5) in gleichem Maße zusammendrückt.

6. Betätigungsvorrichtung nach einem der Ansprüche 1 bis 5, wobei das erste elastische Mittel (4) und das zweite elastische Mittel (5) im Wesentlichen die gleichen Eigenschaften umfassen und so angeordnet sind, dass das Kippstück (6) im Wesentlichen senkrecht in Bezug auf die Verschiebungsachse (x) des Schiebeelements (2) angeordnet ist.

7. Betätigungsvorrichtung nach einem der Ansprüche 1 bis 6, wobei sowohl das erste elastische Mittel (4) als auch das zweite elastische Mittel (5) eine Hauptfeder (40, 50) und eine Sekundärfeder (41, 51) umfassen, die in Reihe geschaltet sind, wobei die Sekundärfedern (41, 51) eine Elastizitätskonstante umfassen, die kleiner als die der Hauptfedern (40, 50) ist, wobei die Sekundärfedern (41, 51) dazu konfiguriert sind, das Kippstück (6) vorzuspannen, wenn die Betätigungsvorrichtung (1) nicht durch den Fahrer betätigt wird.

8. Betätigungsvorrichtung nach einem der Ansprüche 1 bis 7, wobei das Kippstück (6) zwischen dem Schiebeelement (2) und dem ersten elastischen Mittel (4) und dem zweiten elastischen Mittel (5) angeordnet ist, so dass die Verschiebung des Schiebeelements (2) das Kippstück (6) schiebt, wobei das Kippstück (6) das erste elastische Mittel (4) und das zweite elastische Mittel (5) zusammendrückt.

9. Betätigungsvorrichtung nach Anspruch 8, wobei die Verschiebung des Schiebeelements (2) in Abhängigkeit von der Verschiebung des Kippstücks (6) bestimmt wird.

10. Betätigungsvorrichtung nach Anspruch 8 oder 9, wobei das Schiebeelement (2) in der Mitte (64) einer Außenfläche (61) des Kippstücks (6) getragen angeordnet ist, wobei eine erste Hälfte des Kippstücks (6) auf dem ersten elastischen Mittel (4) getragen ist, und eine zweite Hälfte des Kippstücks (6) auf dem zweiten elastischen Mittel (5) getragen ist.

11. Betätigungsvorrichtung nach einem der Ansprüche 1 bis 10, umfassend eine Abdeckung (71), die eine Basis (710) und ein Paar Arme (711) umfasst, die sich senkrecht von der Basis (710) erstrecken, wobei jeder Arm (711) eine Nut (712) umfasst, und wobei das Kippstück (6) ein Paar Kupplungswellen (65) umfasst, wobei die Kupplungswellen (65) des Kippstücks (6) beweglich in den Nuten (712) der Arme (711) der Abdeckung (71) gekoppelt sind.

12. Betätigungsvorrichtung nach Anspruch 11, wobei das erste elastische Mittel (4) und das zweite elastische Mittel (5) zwischen dem Kippstück (6) und der Basis (710) der Abdeckung (71) angeordnet sind.

13. Betätigungsvorrichtung nach Anspruch 11 oder 12, umfassend einen Hauptträger (7) umfassend ein Führungsgehäuse (70), in dem das Schiebeelement (2) beweglich aufgenommen ist, und ein Hauptgehäuse (72), das mit dem Führungsgehäuse (70) in Verbindung steht, in dem das Kippstück (6), das erste elastische Mittel (4) und das zweite elastische Mittel (5) angeordnet sind, wobei die Abdeckung (71) an dem Hauptträger (7) fixiert ist, wobei eine Öffnung des Hauptgehäuses (72) abgedeckt wird.

14. Fahrzeug, umfassend mindestens eine Betätigungsvorrichtung (1) nach einem der Ansprüche 1 bis 13.

15. Verfahren zum Erkennen des Ausfalls eines elastischen Mittels (4, 5) einer Betätigungsvorrichtung (1) nach einem der Ansprüche 1 bis 13, **dadurch gekennzeichnet, dass** der Neigungsgrad des Kippstücks (6) derart überwacht wird, dass, wenn dieser Neigungsgrad von dem vorbestimmten Neigungsgrad abweicht, der Ausfall eines der elastischen Mittel (4, 5) bestimmt wird.

## Revendications

1. Équipement d'actionnement pour un véhicule, ledit équipement d'actionnement comprenant
- un élément poussant (2) qui est déplacé lorsqu'un conducteur agit sur l'équipement d'actionnement (1),
- un premier moyen élastique (4) et un second moyen élastique (5) agencés en parallèle, et
- un basculeur (6),
de telle sorte que lorsque l'élément poussant (2) est déplacé, le premier moyen élastique (4) et le second moyen élastique (5) sont comprimés, exerçant une force sur le basculeur (6), **caractérisé en ce qu'**un fonctionnement incorrect du premier moyen élastique (4) ou du second moyen élastique (5) est détecté lorsque le basculeur (6) présente une inclinaison différente d'une inclinaison de référence prédéterminée.

2. Équipement d'actionnement selon la revendication 1, comprenant une première cible (30) et une seconde cible (31) couplées au basculeur (6), un premier capteur linéaire configuré pour mesurer le déplacement de la première cible (30), et un second capteur linéaire configuré pour mesurer le déplacement de la seconde cible (31), l'inclinaison du basculeur (6) étant déterminée en fonction de la mesure dudit premier capteur linéaire et dudit second capteur linéaire.

3. Équipement d'actionnement selon la revendication 2, comprenant un ensemble électronique (8) comprenant une carte électronique dans laquelle le premier capteur linéaire et le second capteur linéaire sont agencés, un premier canal de guidage (80) dans lequel la première cible (30) est logée de manière mobile et un second canal de guidage (81) dans lequel la seconde cible (31) est logée de manière mobile.

4. Équipement d'actionnement selon la revendication 2 ou 3, dans lequel le premier capteur linéaire est un capteur inductif, et le second capteur linéaire est un capteur linéaire magnétique, la première cible (30) étant une feuille métallique et la seconde cible (31) étant un aimant.

5. Équipement d'actionnement selon l'une quelconque des revendications 1 à 4, dans lequel, durant le fonctionnement normal du premier moyen élastique (4) et du second moyen élastique (5), le déplacement de l'élément poussant (2) comprime lesdits premier moyen élastique (4) et second moyen élastique (5) dans la même mesure.

6. Équipement d'actionnement selon l'une quelconque des revendications 1 à 5, dans lequel le premier moyen élastique (4) et le second moyen élastique (5) comprennent sensiblement les mêmes caractéristiques et sont agencés de sorte que le basculeur (6) est disposé sensiblement perpendiculairement par rapport à l'axe de déplacement (x) de l'élément poussant (2).

7. Équipement d'actionnement selon l'une quelconque des revendications 1 à 6, dans lequel le premier moyen élastique (4) et le second moyen élastique (5) comprennent chacun un ressort principal (40, 50) et un ressort secondaire (41, 51) reliés en série, les ressorts secondaires (41, 51) comprenant une constante élastique inférieure à celle des ressorts principaux (40, 50), les ressorts secondaires (41, 51) étant configurés pour pretendre le basculeur (6) lorsque l'équipement d'actionnement (1) n'est pas actionné par le conducteur.

8. Équipement d'actionnement selon l'une quelconque des revendications 1 à 7, dans lequel le basculeur (6) est agencé entre l'élément poussant (2) et le premier moyen élastique (4) et le second moyen élastique (5), de sorte que le déplacement de l'élément poussant (2) pousse le basculeur (6), le basculeur (6) comprimant le premier moyen élastique (4) et le second moyen élastique (5).

9. Équipement d'actionnement selon la revendication 8, dans lequel le déplacement de l'élément poussant (2) est déterminé en fonction du déplacement du basculeur (6).

10. Équipement d'actionnement selon la revendication 8 ou 9, dans lequel l'élément poussant (2) est agencé en appui au centre (64) d'une face extérieure (61) du basculeur (6), une première moitié du basculeur (6) étant en appui sur le premier moyen élastique (4), et une seconde moitié du basculeur (6) étant en appui sur le second moyen élastique (5).

11. Équipement d'actionnement selon l'une quelconque des revendications 1 à 10, comprenant un capot (71) comprenant une base (710) et une paire de bras (711) s'étendant perpendiculairement à partir de ladite base (710), chaque bras (711) comprenant une rainure (712), et le basculeur (6) comprenant une paire d'arbres de couplage (65), les arbres de couplage (65) du basculeur (6) étant couplés de manière mobile dans les rainures (712) des bras (711) du capot (71).

12. Équipement d'actionnement selon la revendication 11, dans lequel le premier moyen élastique (4) et le second moyen élastique (5) sont agencés entre le basculeur (6) et la base (710) du capot (71).

13. Équipement d'actionnement selon la revendication 11 ou 12, comprenant un support principal (7) comprenant un logement de guidage (70) dans lequel l'élément poussant (2) est logé de manière mobile, et un logement principal (72) en communication avec le logement de guidage (70) dans lequel le basculeur (6), le premier moyen élastique (4) et le second moyen élastique (5) sont agencés, le capot (71) étant fixé audit support principal (7), couvrant une ouverture du logement principal (72).

14. Véhicule comprenant au moins un équipement d'actionnement (1) selon l'une quelconque des revendications 1 à 13.

15. Procédé de détection de la défaillance d'un moyen élastique (4, 5) d'un équipement d'actionnement (1) selon l'une quelconque des revendications 1 à 13, **caractérisé en ce que** le degré d'inclinaison du basculeur (6) est surveillé de sorte que si ledit degré d'inclinaison diffère du degré d'inclinaison prédéterminé, la défaillance de l'un des moyens élastiques (4, 5) est déterminée.
